# EUROPEAN PATENT APPLICATION

(11) **EP 3 337 030 A1**
(43) Date of publication of application: **20.06.2018**
(21) Application number: 16204681.7
(22) Date of filing: 16.12.2016
(51) Int. Cl.: H02P 9/30, H02P 25/03, H02M 7/483, H02K 11/042

(54) **EXCITATION SYSTEM FOR A SYNCHRONOUS MACHINE**

(71) Applicant: ABB Schweiz AG, 5400 Baden (CH)
(72) Inventor: PATHMANATHAN, Mehanathan, 722 15 Västerås (SE); BOSGA, Sjoerd, 723 53 Västerås (SE); RODRIGUEZ, Pedro, 722 25 Västerås (SE)
(74) Representative: Savela, Reino Aleksi

(57) **Abstract**

The present disclosure relates to an excitation system (1-1) for a synchronous machine, comprising: a plurality of coil groups (7a-7c) connected to each other, forming a field winding of a rotor of a synchronous machine, and a plurality of energy storage devices (9a-9c) each comprising a respective energy storage unit, each energy storage device (9a-9c) being connected to a respective coil group (7a-7c), and each energy storage device (9a-9c) being configured to be fed with a dc magnetizing current, wherein each energy storage device (9a-9c) is configured to be controlled to set the amount of charging of the corresponding energy storage unit (19) by the dc magnetizing current, to thereby provide individual control of the amount of energy in the respective coil group (7a-7c).

## Description

### TECHNICAL FIELD

The present disclosure generally relates to synchronous machines. In particular, it relates to an excitation system for a synchronous machine.

### BACKGROUND

Synchronous machines with field windings generate a rotor magnetic field via their field winding current. This current is primarily delivered to the field winding by two methods: static or brushless excitation.

Static excitation systems make use of carbon brushes to supply a controlled DC current to the rotating field winding. The advantage of static excitation systems is that they are able to change the field winding voltage with a quick response, and can apply a negative voltage when demagnetization of the field winding is required. A disadvantage of such a system is that the carbon brushes reduce the reliability of the system.

Brushless excitation systems make use of an inside-out synchronous machine with a stationary field winding and a rotating three-phase winding in fix speed applications. Or else, in variable speed application, an asynchronous exciter is used. In both systems, a rectifier is connected to this three-phase winding, the output of which is in turn connected to the field winding of the synchronous machine.

The advantage of brushless excitation systems is that no carbon brushes are needed, thereby improving the reliability compared to a static excitation system. A drawback is the response time when changing the field winding voltage is increased due to the time constant of the exciter stator. Additionally, the presence of a diode rectifier means that negative voltage cannot be applied directly to the field winding to quickly de-energize it.

A recent development in brushless excitation has been the adoption of controlled rotating AC-DC converters in the place of a diode rectifier. An example of such a product is the VBE-T series of rotating brushless thyristor exciters from Voith Hydro. This system combines the benefits of static and brushless excitation systems by having a fast control of field winding current without the need for brushes

WO2016/080889 A1 discloses an electrical machine rotor provided with a field winding divided into groups and controlled with separate current supplies. These supplies come from either static excitation systems or brushless excitation systems with rotating controlled power electronic converters. The objective of controlling the field current in such a manner is to control the force between rotor and stator of the synchronous machine in order to eliminate eccentricity of the rotor. WO2016/080889 does not disclose any examples of an implementation of how the current control of the field winding groups is obtained.

### SUMMARY

In view of the above, an object of the present disclosure is to provide an excitation system for a synchronous machine which solves, or at least mitigates, the problems of the prior art.

There is hence according to a first aspect of the present disclosure provided an excitation system for a synchronous machine, comprising: a plurality of coil groups connected to each other, forming a field winding of a rotor of a synchronous machine, and a plurality of energy storage devices each comprising a respective energy storage unit, each energy storage device being connected to a respective coil group, and each energy storage device being configured to be fed with a dc magnetizing current, wherein each energy storage device is configured to be controlled to set the amount of charging of the corresponding energy storage unit by the dc magnetizing current, to thereby provide individual control of the amount of energy in the respective coil group.

In this manner, force compensation between the rotor and the stator of a synchronous machine may be provided.

A coil group may comprise only a single coil or a plurality of coils connected in series and/or in parallel. This means that an energy storage device may provide individual control of the amount of energy in a single coil if a coil group only includes one coil. In case a coil group contains a plurality of coils, the control of the energy in the coil group will be on a coil group level but not on an individual coil level.

According to one embodiment each energy storage device comprises a plurality of controllable switches, wherein the energy storage unit is a capacitor, and wherein the switches are configured to control the charging and discharging of the capacitor.

According to one embodiment the switches are connected in an H-bridge configuration for each energy storage device.

According to one embodiment each H-bridge has two legs and each coil group of the plurality of coil groups has a first end connected between a first switch in a first leg of an H-bridge and a third switch in a second leg of that H-bridge.

According to one embodiment the plurality of switches are IGBTs.

One embodiment comprises a control system configured to control the energy storage devices, wherein each energy storage device is configured to be individually controlled by the control system.

According to one embodiment the control system comprises a wireless transmitter, and a wireless receiver configured to be mounted to a rotor shaft of the synchronous machine, and the wireless transmitter is configured to transmit control signals to the wireless receiver to control the energy storage devices.

According to one embodiment at least some of the coil groups are connected in series and each corresponding energy storage device is connected in parallel with its coil group, wherein each such energy storage device is a current injection device.

According to one example, all of the coil groups are connected in series and the each energy storage device is connected in parallel with the corresponding coil group.

In large synchronous machines, the dc magnetizing current is very large, typically hundreds of amps, but the field voltage is very low, typically a few hundred Volt or less. For energy storage devices comprising semiconductor switches, this is an unusual combination; typical semiconductor switches that are suited for such high currents are rated for higher voltages.

In the topology with series connection, the current in the semiconductor switches is much lower than the main dc magnetizing current, since these current sources provide only the AC component on top of the DC component of the main dc magnetizing current. Thus, the power electronics in the current sources will be rated for low current and low voltage, which is a good match for the semiconductor switches.

According to one embodiment a second end of that coil group is connected between a second switch in the first leg of that H-bridge and a fourth switch in the second leg of that H-bridge.

According to one embodiment at least some of the coil groups are connected in parallel and each corresponding energy storage device is connected in series with its coil group, wherein each such energy storage device is a voltage modulation device.

According to one embodiment some of the coil groups may be connected in parallel with each other and some of the coil groups may be connected in series with each other. The parallel connected coil groups are each series-connected to respective energy storage device and the series-connected coil groups are each connected in parallel with a respective energy storage device.

One embodiment comprises a single rectifier which has dc terminals connected to the plurality of coil groups and energy storage devices.

One embodiment comprises a plurality of rectifiers, wherein each rectifier is connected to a respective coil group and energy storage device, each coil group and energy storage device being connected to the dc terminals of a respective rectifier.

According to one embodiment the excitation system is a static excitation system.

According to one embodiment the excitation system is a brushless excitation system.

There is according to a second aspect of the present disclosure provided a method of controlling current in a field winding of the rotor of a synchronous machine by means of an excitation system comprising a plurality of coil groups connected to each other, forming a field winding of a rotor of a synchronous machine, and a plurality of energy storage devices each comprising a respective energy storage unit, each energy storage device being connected to a respective coil group, and each energy storage device being configured to be fed with a dc magnetizing current, wherein each energy storage device is configured to be controlled to set the amount of charging of the corresponding energy storage unit by the dc magnetizing current, to thereby provide individual control of the amount of energy in the respective coil group, wherein the method comprises: a) receiving a control signal, and b) controlling the energy storage devices based on the control signal to set the amount of energy in the corresponding coil group.

According to one embodiment the control signal is received wirelessly.

According to a third aspect of the present disclosure there is provided a synchronous machine, including an excitation system according to the first aspect presented herein.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a first example of an excitation system for a synchronous machine;
Fig. 2 schematically shows a second example of an excitation system for a synchronous machine;
Fig. 3 schematically shows third example of an excitation system for a synchronous machine;
Fig. 4 shows an example of an energy storage unit for any of the excitation systems shown in Figs 1-3; and
Fig. 5 shows an example of an excitation system including a plurality of energy storage units shown in Fig. 4.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

The present concept relates to an excitation system for a synchronous machine. The excitation system may be a static excitation system or a brushless excitation system.

The excitation system comprises a plurality of coil groups, which form a field winding of a rotor of the synchronous machine. Each coil group forms a part of a magnetic pole or a magnetic pole pair of the rotor.

The excitation system further comprises a plurality of energy storage devices, each comprising a respective energy storage unit. Each energy storage device is configured to be mounted onto a rotor shaft of the synchronous machine. Each energy storage device is connected to a respective one of the coil groups. Each energy storage device and coil group is connected to the dc terminals of a rectifier, and configured to be fed with a dc magnetization current from the rectifier. In particular, each energy storage device is configured to be controlled to set the amount of charging of the corresponding energy storage unit by selectively allowing the dc magnetizing current to flow through the energy storage unit. In this manner, individual control of the amount of energy in each coil group may be provided. Force compensation between the rotor and stator may as a result be obtained. Thus, for example in the event of the presence of an eccentricity condition of the rotor inside the stator, any undesired force distribution resulting from this may be compensated for by individual control of the energy in each coil group. For example, at any instance in time the energy in one coil group may be needed to be increased, while the energy in another coil group may be needed to be decreased to obtain the desired force distribution between the stator and the rotor.

Control of the energy storage devices may be based on measurements or estimates of forces between the rotor and the stator of the main synchronous machine. These forces may be measured by means of sensors, as for example disclosed in WO2016/080889. The excitation system may comprise a control system including a wireless transmitter configured to be arranged stationary, and a wireless receiver configured to be arranged on the rotor shaft. The wireless transmitter may be configured to send control signals, based on measurements and/or estimates of forces acting between the rotor and the stator, to the wireless receiver to thereby provide individual control of the energy storage devices.

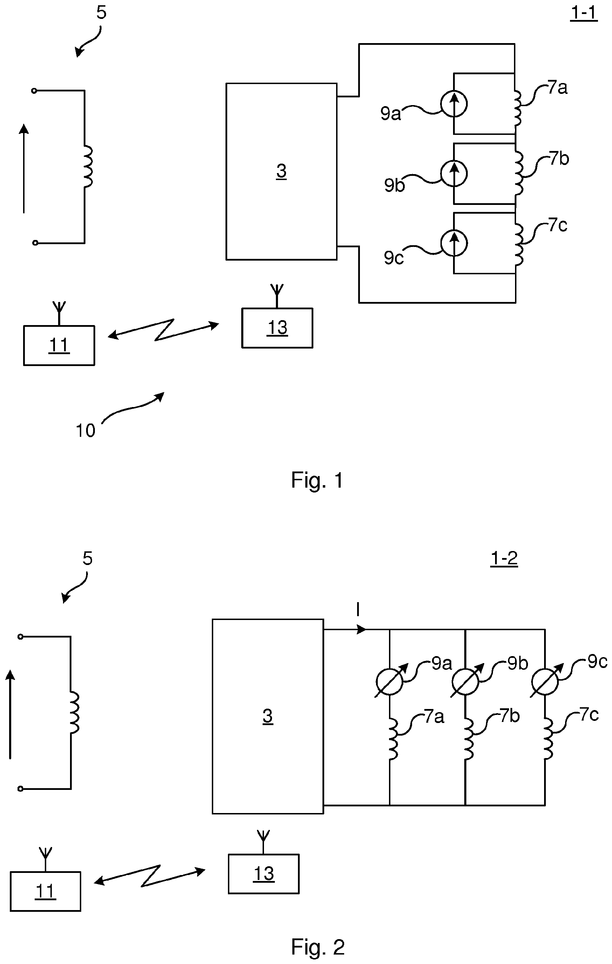

Examples of an excitation system for a synchronous machine will now be described with reference to Figs 1-3. It should be noted, that although in the examples below three coil groups are shown, it should be understood that the excitation systems could have fewer than three coil groups, or more than three coil groups.

Fig. 1 shows an example of an excitation system 1-1 for a synchronous machine. The excitation system 1-1 is a brushless excitation system. The excitation system 1-1 comprises a single rectifier 3 configured to be mounted on the rotor shaft of the synchronous machine, in particular on an exciter rotor. The exciter rotor is configured to electromagnetically interact with an exciter stator 5.

Excitation system 1-1 furthermore comprises a plurality of coil groups 7a-7c connected in series with each other. The coil groups 7a-7c form a field winding of the rotor. The coil groups 7a-7c are connected to the dc terminals of the rectifier 3. The rectifier 3 is configured to feed a dc magnetizing current I to the coil groups 7a-7c and thus to the field winding.

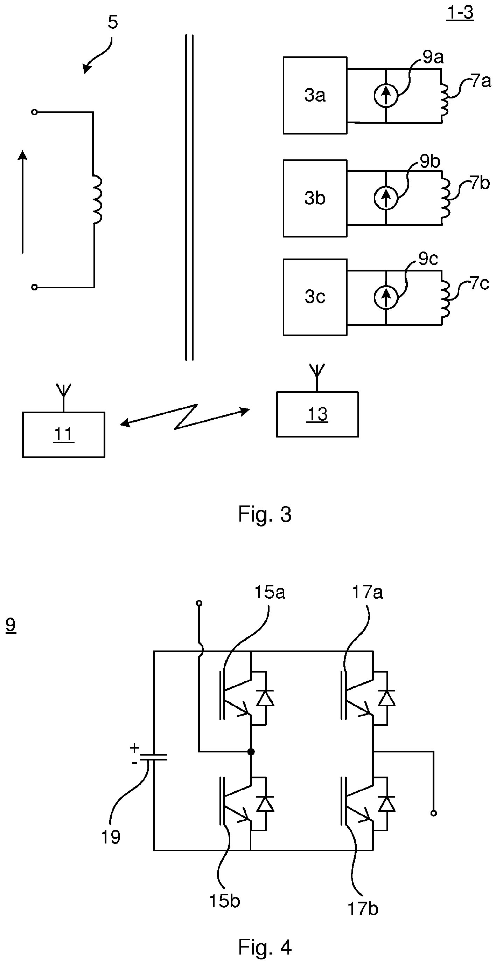

The excitation system 1-1 includes a plurality of energy storage devices 9a-9c, each comprising a respective energy storage unit 19, see Fig. 4. Each energy storage unit may for example be a capacitor. Each energy storage device 9a-9c is connected in parallel with a respective coil group 7a-7c. Hence, for example, a first energy storage device 9a is connected in parallel with a first coil group 7a, and a second energy storage device 9b is connected in parallel with a second coil group 7b. In the present example, the energy storage devices 9a-9c are configured to be individually controlled to charge the respective energy storage unit by means of the dc magnetizing current and to discharge the respective energy storage unit to thereby provide individual control of the amount of energy in the coil groups 7a-7c. In the example in Fig. 1, the energy storage devices 9a-9c are current injection devices. The energy storage devices 9a-9c are hence configured to inject an ac compensating current into the respective coil group 7a-7c, to thereby provide force compensation between the stator and rotor of the synchronous machine. Hereto, the magnitude of the compensating current flowing though the coil groups 7a-7c may be individually controlled.

The excitation system 1-1 may further comprise a control system 10 comprising a wireless transmitter 11, a wireless receiver 13 including a control unit configured to control the energy storage devices 9a-9c. The wireless receiver 13 is configured to be mounted onto the exciter rotor shaft of the synchronous machine. The wireless transmitter is configured to transmit control signals to the wireless receiver 13, whereby the wireless receiver, including the control unit, is configured to individually control the energy storage devices 9a-9c. Any suitable protocol may be used for the wireless communication between the wireless transmitter 11 and the wireless receiver 13.

A second example of an excitation system for a synchronous machine is shown in Fig. 2. The excitation system 1-2 is similar to excitation system 1-1, and comprises the control system 10. However, in this case, the coil groups 7a-7c are connected in parallel with each other. Furthermore, each energy storage device 9a-9c is connected in series with a respective coil group 7a-7c. Hence, for example, the first energy storage device 9a is connected in series with the first coil group 7a and the second energy storage device 9b is connected in series with the second coil group 7b. The energy storage devices 9a-9c are in this case voltage modulation devices. The voltage across each coil group 7a-7c may be individually controlled by voltage division between the corresponding energy storage unit and the coil group 7a-7c in question.

A third example of an excitation system for a synchronous machine is shown in Fig. 3. The excitation system 1-3 differs from the previous examples in that it comprises one separate rectifier 3a-3c for each coil group 7a-7c, i.e. a plurality of rectifiers 3a-3c. Thus, each coil group 7a-7c is configured to be connected to a respective rectifier 3a-3c, in particular to the dc terminals of the respective rectifier. Each coil group 7a-7c is connected to a respective energy storage device 9a-9c. In particular, each coil group 7a-7c is connected in parallel with a respective energy storage device 9a-9c. The energy storage devices 9a-9c are in this case current injection devices. The excitation system 1-3 also comprises the control system 10 configured to control the energy storage devices 9a-9c. The operation of the excitation system 1-3 is similar to what has been previously been described in the first example in Fig. 1.

The example in Fig. 3 makes use of single-phase rectifiers to supply each respective coil group. In more general, the topology can be realized with n-phase rectifiers so long as the rotor windings of the exciter machine are divided into groups of n phases.

Fig. 4 shows an example of an energy storage device 9. Any of the energy storage devices 9a-9c may be of this type. Energy storage device 9 comprises a plurality of switches 15a-15b and 17a-17b arranged in an H-bridge configuration. A first switch 17a and a second switch 15a form a first leg of the H-bridge and a third switch 17b and a fourth switch 15b form a second leg of the H-bridge. Switches 15a-15b and 17a-17b may be power electronics switches with controllable turn-off, for example Insulated Gate Bipolar Transistors (IGBT). The energy storage unit 19 is according to the example a capacitor. The capacitor is connected to the two legs of the H-bridge to allow charging and discharging of the capacitor by suitable switching of the switches 15a-15b and 17a-17b.

In the example in Fig. 1, each coil group 7a-7c is at a first end connected between the first switch 17a and the third switch 17b of an energy storage device 9a-9c, and at a second end between the second switch 15a and the fourth switch 15b of that energy storage device 9a-9c.

In the example in Fig. 2, each coil group 7a-7c is at a first end connected between the first switch 17a and the third switch 17b of an energy storage device 9a-9c. At a second end, the coil groups 7a-7c may be connected to each other. Similarly, the energy storage devices 9a-9c may be connected to each other at points between the second switch 15a and the fourth switch 15b of each respective energy storage device 9a-9c.

In the case that the switches 15a-15b and 17a-17b are semiconductor switches, the control unit of the wireless receiver 13 may for example comprise a gate control unit, configured to provide switching signals to the gates of switches 15a-15b and 17a-17b.

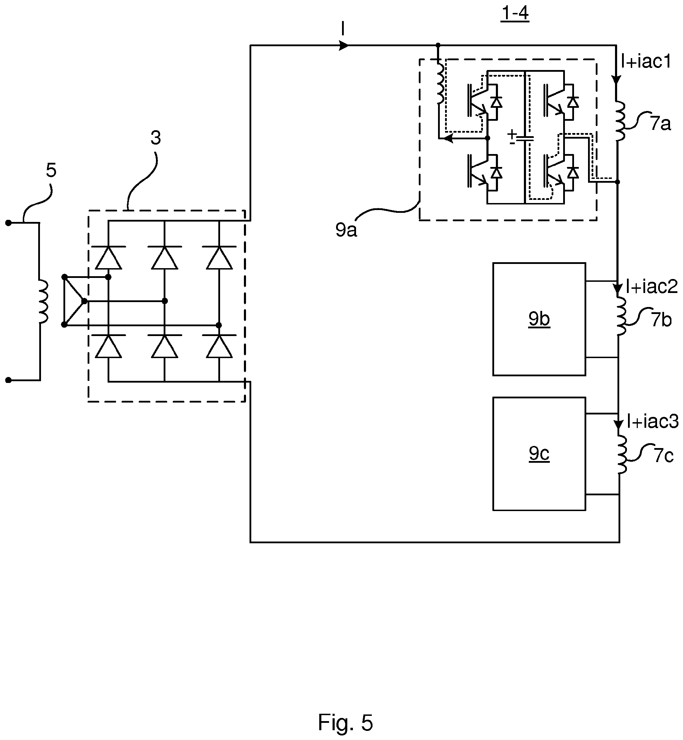

Fig. 5 shows one example of an excitation system 1-4 which is a more detailed example of excitation system 1-1 shown in Fig. 1. In the example in Fig. 5, rectifier 3 comprises a diode bridge and is connected in a delta-configuration. It should be noted that the rectifier may be realised in a number of manners, for example by using thyristors instead of diodes. Moreover, the rectifier could alternatively be connected in a wye-configuration. In particular, the rectifier configuration depends on the configuration of the exciter rotor winding(s).

In Fig. 5 the uppermost energy storage device 9a has been drawn out in detail, with the configuration presented in Fig. 4. The implementations of the remaining energy storage devices 9b-9c have not been detailed, but each one could be of the type shown in Fig. 4. By switching on the third switch 17b and the second switch 15a, current is able to flow through the energy storage unit, i.e. the capacitor, thereby charging the capacitor. By discharging the capacitor in a suitable manner, the total magnetizing current I+iac1 may either be smaller than the dc magnetizing current I, or larger, depending on the polarity of the charged capacitor. The same principle applies to the energy storage devices 9b and 9c as well. In this manner, the current flowing through each coil group may be individually controlled. Since the control of the switches is based on measured and/or estimated forces between the stator and the rotor, force compensation between the rotor and the stator may be obtained by means of the controllable energy distribution in the coil groups.

In the case that an energy storage device 9a-9c is series-connected with a respective coil group 7a-7c, like in the example shown in Fig. 2, the voltage distribution between the capacitor and the corresponding coil group can be set by suitably charging or discharging the capacitor. In this way, force compensation may be obtained also when with a parallel-connected coil group configuration.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. An excitation system (1-1; 1-2; 1-3; 1-4) for a synchronous machine, comprising:
a plurality of coil groups (7a-7c) connected to each other, forming a field winding of a rotor of a synchronous machine, and
a plurality of energy storage devices (9a-9c) each comprising a respective energy storage unit (19), each energy storage device (9a-9c) being connected to a respective coil group (7a-7c), and each energy storage device (9a-9c) being configured to be fed with a dc magnetizing current,
wherein each energy storage device (9a-9c) is configured to be controlled to set the amount of charging of the corresponding energy storage unit (19) by the dc magnetizing current, to thereby provide individual control of the amount of energy in the respective coil group (7a-7c).

2. The excitation system (1-1; 1-2; 1-3; 1-4) as claimed in claim 1, wherein each energy storage device (9a-9c) comprises a plurality of controllable switches (15a-b, 17a-b), wherein the energy storage unit (19) is a capacitor, and wherein the switches (15a-b, 17a-b) are configured to control the charging and discharging of the capacitor.

3. The excitation system (1-1; 1-2; 1-3; 1-4) as claimed in claim 2, wherein the switches (15a-b, 17a-b) are connected in an H-bridge configuration for each energy storage device (9a-9c).

4. The excitation system (1-1; 1-2; 1-3; 1-4) as claimed in claim 3, wherein each H-bridge has two legs and each coil group (7a-7c) of the plurality of coil groups (7a-7c) has a first end connected between a first switch (17a) in a first leg of an H-bridge and a third switch (17b) in a second leg of that H-bridge.

5. The excitation system (1-1; 1-2; 1-3; 1-4) as claimed in any of claims 2-4, wherein the plurality of switches (15a-b, 17a-b) are IGBTs.

6. The excitation system (1-1; 1-2; 1-3; 1-4) as claimed in any of the preceding claims, comprising a control system (10) configured to control the energy storage devices (9a-9c), wherein each energy storage device (9a-9c) is configured to be individually controlled by the control system (10).

7. The excitation system (1-1; 1-2; 1-3; 1-4) as claimed in claim 6, wherein the control system (10) comprises a wireless transmitter (11), and a wireless receiver (13) configured to be mounted to a rotor shaft of the synchronous machine, and the wireless transmitter (11) is configured to transmit control signals to the wireless receiver (13) to control the energy storage devices (9a-9c).

8. The excitation system (1-1; 1-4) as claimed in any of the preceding claims, wherein at least some of the coil groups (7a-7c) are connected in series and each corresponding energy storage device (9a-9c) is connected in parallel with its coil group (7a-7c), wherein each such energy storage device (9a-9c) is a current injection device.

9. The excitation system (1-1; 1-4) as claimed in claim 8 dependent of claim 4, wherein a second end of that coil group (7a-7c) is connected between a second switch (15a) in the first leg of that H-bridge and a fourth switch (15b) in the second leg of that H-bridge.

10. The excitation system (1-2) as claimed in any of claims 1-8, wherein at least some of the coil groups (7a-7c) are connected in parallel and each corresponding energy storage device (9a-9c) is connected in series with its coil group (7a-7c), wherein each such energy storage device (7a-7c) is a voltage modulation device.

11. The excitation system (1-1; 1-2; 1-4) as claimed in any of the preceding claims, comprising a single rectifier (3) which has dc terminals connected to the plurality of coil groups (7a-7c) and energy storage devices (9a-9c).

12. The excitation system (1-3) as claimed in any of claims 1-10, comprising a plurality of rectifiers (3a-3c), wherein each rectifier (3a-3c) is connected to a respective coil group (7a-7c) and energy storage device (9a-9c), each coil group (7a-7c) and energy storage device (9a-9c) being connected to the dc terminals of a respective rectifier (3a-3c).

13. The excitation system as claimed in any of the preceding claims, wherein the excitation system is a static excitation system.

14. The excitation system (1-1; 1-2; 1-4) as claimed in any of claims 1-12, wherein the excitation system is a brushless excitation system.

15. A method of controlling current in a field winding of the rotor of a synchronous machine by means of an excitation system (1-1; 1-2; 1-3; 1-4) comprising a plurality of coil groups (7a-7c) connected to each other, forming a field winding of a rotor of a synchronous machine, and a plurality of energy storage devices (9a-9c) each comprising a respective energy storage unit (19), each energy storage device (9a-9c) being connected to a respective coil group (7a-7c), and each energy storage device (9a-9c) being configured to be fed with a dc magnetizing current, wherein each energy storage device (9a-9c) is configured to be controlled to set the amount of charging of the corresponding energy storage unit (19) by the dc magnetizing current, to thereby provide individual control of the amount of energy in the respective coil group (7a-7c), wherein the method comprises:
a) receiving a control signal, and
b) controlling the energy storage devices (9a-9c) based on the control signal to set the amount of energy in the corresponding coil group (7a-7c).
